(19)

Europäisches Patentamt

European Patent Office

Office européen des brevets

(11) **EP 4 195 606 A1**

(12) **EUROPEAN PATENT APPLICATION**
published in accordance with Art. 153(4) EPC

(43) Date of publication:
**14.06.2023 Bulletin 2023/24**

(21) Application number: **21859992.6**

(22) Date of filing: **22.07.2021**

(51) International Patent Classification (IPC):
**H04L 41/0695** *(2022.01)*

(52) Cooperative Patent Classification (CPC):
**H04L 43/08; G06F 16/2458; H04L 43/16**

(86) International application number:
**PCT/CN2021/107922**

(87) International publication number:
**WO 2022/042152 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2020 CN 202010898021**

(71) Applicant: **ZTE Corporation**
**Shenzhen, Guangdong 518057 (CN)**

(72) Inventors:
• **JIANG, Yong**
**Shenzhen, Guangdong 518057 (CN)**
• **YANG, Hui**
**Shenzhen, Guangdong 518057 (CN)**

• **PENG, Xin**
**Shenzhen, Guangdong 518057 (CN)**
• **BO, Kaitao**
**Shenzhen, Guangdong 518057 (CN)**
• **LI, Rui**
**Shenzhen, Guangdong 518057 (CN)**
• **BAO, Bowen**
**Shenzhen, Guangdong 518057 (CN)**
• **ZHANG, Jie**
**Shenzhen, Guangdong 518057 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **METHOD AND DEVICE FOR ANALYZING ASSOCIATION RULE OF MULTI-DIMENSIONAL NETWORK INDEXES, AND STORAGE MEDIUM**

(57)    Disclosed are a method and a device for analyzing correlation rules of multidimensional network indicators and a storage medium. The method includes mapping indicator data to obtain a data sequence (101); mining correlation rules from the data sequence to obtain a correlation indicator set of a pre-selected target indicator, the correlation indicator set consisting of network indicators correlated with the target indicator (102); obtaining a correlation coefficient of each indicator in the correlation indicator set with the target indicator (103); and analyzing according to the correlation coefficient to obtain a correlation result of the target indicator (104).

FIG. 1

**Description**

**CROSS-REFERENCE TO RELATED APPLICATIONS**

This application claims priority to Chinese Patent Application No. 202010898021.5, filed on August 31, 2020, the entire contents of which are incorporated herein by reference.

**TECHNICAL FIELD**

The present application relates to the technical field of network operation and maintenance, and in particular to a method and a device for analyzing correlation rules of multidimensional network indicators and a storage medium.

**BACKGROUND**

Currently, the monitoring method uses the data mining algorithm to mine the correlation rules of the indicator data, predicts the state of the future network according to the frequent item set output by the mining algorithm, and monitors the abnormal and uncontrollable changes in the network.

However, if the frequent item set output by the mining algorithm is directly taken as the correlation result of the massive time sequence indicator, it can only describe the simple correlation relationship between the network indicators, which makes the correlation result not enough to accurately predict the future network.

**SUMMARY**

Embodiments of the present application provide a method for analyzing correlation rules of multidimensional network indicators, including: mapping indicator data to obtain a data sequence; finding correlation rules from the data sequence to obtain a correlation indicator set of a pre-selected target indicator, wherein the correlation indicator set consists of network indicators correlated with the target indicator; obtaining a correlation coefficient of each indicator in the correlation indicator set with the target indicator; and analyzing according to the correlation coefficient to obtain a correlation result of the target indicator.

Embodiments of the present application further provide a device for analyzing correlation rules of multidimensional network indicators, including: a memory, a processor, a program stored on the memory and runnable on the processor, and a data bus for implementing communication between the processor and the memory, the program are executed by the processor to implement the operations of the method described above.

Embodiments of the present application further provide a storage medium storing one or more programs that when executed by one or more processors causes the processor to perform the operations of the method described above.

**BRIEF DESCRIPTION OF THE DRAWINGS**

One or more embodiments are illustrated exemplarily by the accompanying drawings; these exemplary illustrations do not constitute a limitation of the embodiments, and elements having the same reference number in the accompanying drawings are indicated as similar elements, and the drawings do not constitute a limitation of scale unless specifically asserted.

FIG. 1 is a flowchart of a method for analyzing correlation rules of multidimensional network indicators according to a first embodiment of the present application.

FIG. 2 is a flowchart of a method for analyzing correlation rules of multidimensional network indicators according to a second embodiment of the present application.

FIG. 3 is a flowchart of an operation 202 in the method for analyzing correlation rules of multidimensional network indicators shown in FIG. 2 according to the second embodiment of the present application.

FIG. 4 is a flowchart of a method for analyzing correlation rules of multidimensional network indicators according to a third embodiment of the present application.

FIG. 5 is a flowchart of an operation 401 in the method for analyzing correlation rules of multidimensional network indicators shown in FIG. 4 according to a third embodiment of the present application.

FIG. 6 is a flowchart of a method for analyzing correlation rules of multidimensional network indicators according to a fourth embodiment of the present application.

FIG. 7 is a flowchart of a method for analyzing correlation rules of multidimensional network indicators according to a fifth embodiment of the present application.

FIG. 8 is a schematic structural diagram of an apparatus according to a sixth embodiment of the present application.

## DETAILED DESCRIPTION OF THE EMBODIMENTS

In order to make the purpose, technical solutions and advantages of the embodiments of the present application clearer, each of the embodiments of the present application will be described in detail below in conjunction with the accompanying drawings. However, it will be understood by those skilled in the art that in each embodiment of the present application, many technical details are presented to enable the reader to better understand the present application. However, even without these technical details and various variations and modifications based on each of the following embodiments, the technical solutions protected by the present application can be realized. The following individual embodiments are divided for descriptive convenience and shall not constitute any limitation to the specific manner of embodiment of the present application, and the individual embodiments may be combined and referenced to each other without contradiction.

In order to provide users with high-quality network services, abnormal and uncontrollable changes in the network need to be monitored to maintain normal and stable operation of the network. Currently, the monitoring method uses the data mining algorithm to mine the correlation rules of the indicator data, predicts the state of the future network according to the frequent item set output by the mining algorithm, and monitors the abnormal and uncontrollable changes in the network.

However, if the frequent item set output by the mining algorithm is directly taken as the correlation result of the massive time sequence indicator, it can only describe the simple correlation relationship between the network indicators, which makes the correlation result not enough to accurately predict the future network.

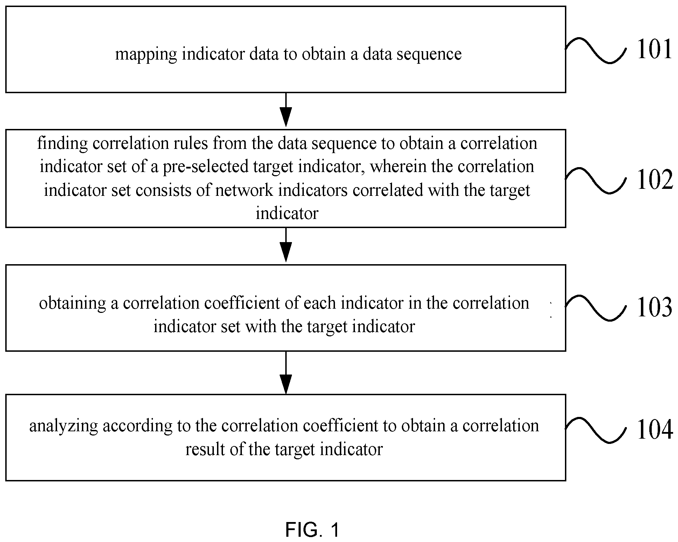

The first embodiment of the present application relates to a method for analyzing correlation rules of multidimensional network indicators, the flowchart of which is shown in FIG. 1, including:

operation 101, mapping indicator data to obtain a data sequence.

In the embodiment, the indicators are multidimensional network indicators, which may include: operational status indicators reflecting various resource objects of the network and performance indicators reflecting service traffic and quality. The operational status indicators reflecting various resource objects of the network may include: a CPU utilization, a memory utilization, a temperature, etc. on the board, and an optical power, a bias current, etc. on the port. The performance indicators reflecting service traffic and quality can include: a traffic flow, a flow rate, a bandwidth, a delay, a jitter, a packet loss, etc. Of course, the above is only a specific example, in the actual use, the play configuration parameters can also include other network indicators, which are not repeated here.

The embodiment does not limit the mapping, in the actual use, the mapping can be any one of the methods that can map the indicator data.

Operation 102, finding correlation rules from the data sequence to obtain a correlation indicator set of a pre-selected target indicator, wherein the correlation indicator set consists of network indicators correlated with the target indicator.

In the embodiment, the target indicators are selected according to the specific situation when in use, and the network indicators that currently need attention are selected. In actual use, the target indicators can be selected once and kept unchanged, or the selected target indicators can be replaced.

In the embodiment, the method used for finding correlation rules can include: an apriori algorithm, a FP-growth algorithm, a PrefixSpan algorithm, an Eclat algorithm, etc. Of course, the above is only a specific example, in the actual use, the method for finding the correlation rules can also include other methods, which are not repeated here one by one.

Operation 103, obtaining a correlation coefficient of each indicator in the correlation indicator set with the target indicator.

The embodiment does not limit the correlation coefficient, in the actual use, the correlation coefficient can be any kind of coefficient that can reflect the correlation strength of indicators. Since the specific process of obtaining the correlation coefficient may vary with the definition of the correlation coefficient, thus, in actual use, it can be any method corresponding to the correlation coefficient, for example, the correlation coefficient is the Spearman correlation coefficient,

$$\rho = \frac{\sum_{i=1}^{N}(x_i - \bar{x})(y_i - \bar{y})}{\left[\sum_{i=1}^{N}(x_i - \bar{x})^2 \sum_{i=1}^{N}(y_i - \bar{y})^2\right]^{\frac{1}{2}}}$$

and the correlation coefficient is obtained by the formula: , where $x$ and $y$ are the rank of the data of two different network indicators, and the rank is obtained according to the orders by sorting all the data of an indicator, $i$ is an order of the observed value, and N is the total number of observed values.

Operation 104, analyzing according to the correlation coefficient to obtain a correlation result of the target indicator.

In the embodiment, analyzing the correlation coefficient may be setting a threshold value, and the strength of the correlation relationship between the target indicators is determined according to the threshold value and the correlation coefficient. Moreover, the threshold value can be set uniformly for all indicators or set separately according to the a priori knowledge of each indicator, and the threshold value can be a constant or a variable function. For example, if the threshold value of all indicators is uniformly set to 0.5, then when the correlation coefficient of the target indicator with a certain indicator is 0.6, thus their correlation strength is higher, and when the correlation coefficient of the target indicator with a certain indicator is 0.45, thus their correlation strength is not so higher.

The embodiment of the present application, relative to the prior art, improves the finding effect of the correlation rule by mapping the obtained indicator data, obtaining a data sequence, changing the form of the data. The embodiment of the present application mines the correlation rules of the data sequence, obtains a correlation indicator set of the pre-selected target indicator according to the correlation rule found, and obtains the correlation coefficient of each indicator in the correlation indicator set with the target indicator, and analyzes according to the correlation coefficient to obtain the strong correlation relationship of the target indicator. Since the statistical analysis method is added after finding the correlation rules to further analyze the correlation rules to obtain a more accurate correlation relationship between the indicators. As can be seen, the present technical solution can further analyze the frequent item set directly output by finding the correlation rules and determine the strength of the correlation relationship of network indicators to obtain the strong correlation relationship of network indicators, and thus solve the problem that the correlation results are not enough to make accurate prediction of the future network.

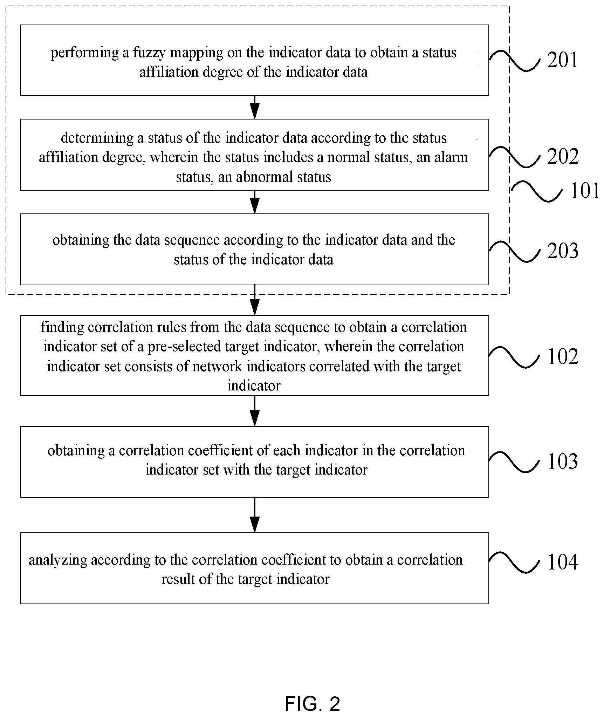

The second embodiment of the present application relates to a method for analyzing correlation rules of multidimensional network indicators, which is essentially the same as the method for analyzing correlation rules of multidimensional network indicators provided in the first embodiment of the present application, the difference is that, as shown in FIG. 2, operation 101 includes:

operation 201, performing a fuzzy mapping on the indicator data to obtain a status affiliation degree of the indicator data.

$$\mu_j(x_{ij}) = \exp\left\{-\frac{(x_{ij} - a_j)^2}{(\sigma_j)^2}\right\}$$

In the embodiment, the fuzzy mapping can be a Gaussian function: , where the indicator data $x_{ij}$ is an ith data acquired by a jth indicator, and $a_j$ and $\sigma_j$ are two adjustment parameters of the Gaussian function. $a_j$ and $\sigma_j$ can be the mean and standard deviation of the data collected by the jth indicator. Of course, the above is only a specific example, in the actual use, the fuzzy mapping can also include other mappings, the two adjustment parameters of the Gaussian function can also be set uniformly for all indicators or set according to the a priori knowledge, which are not repeated one by one.

It should be noted that in the embodiment, since the fuzzy mapping is used, the value obtained by mapping cannot directly determine the status of the indicator data, and needs to be determined after analysis.

Operation 202, determining a status of the indicator data according to the status affiliation degree, wherein the status includes a normal status, an alarm status, an abnormal status.

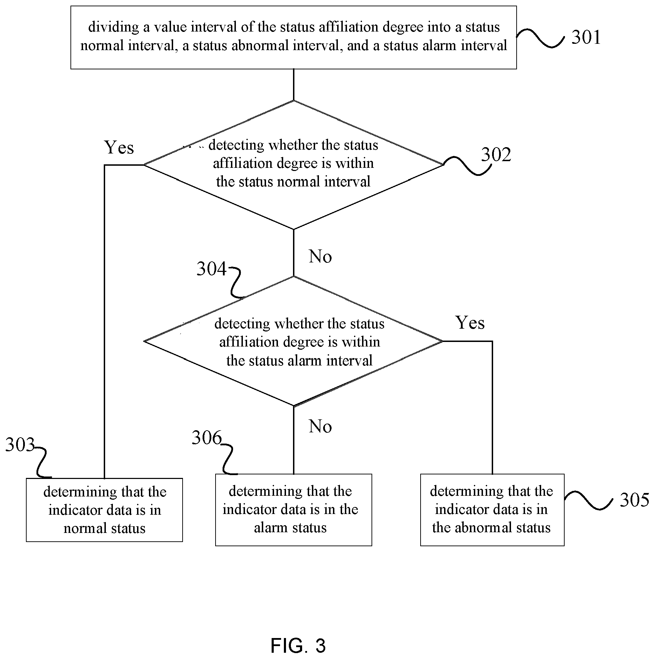

Specifically, as shown in FIG. 3, operation 202 may include the following operations.

Operation 301, dividing a value interval of the status affiliation degree into a status normal interval, a status abnormal interval, and a status alarm interval.

Operation 302, detecting whether the status affiliation degree is within the status normal interval, entering operation 303 when within the status normal interval, otherwise, entering operation 304 when not within the status normal interval.

Operation 303, determining that the indicator data is in normal status.

Operation 304, detecting whether the status affiliation degree is within the status alarm interval, entering operation 305 when within the status alarm interval, otherwise, entering operation 306 when not within the status alarm interval.

Operation 305, determining that the indicator data is in the abnormal status.

Operation 306, determining that the indicator data is in the alarm status.

The embodiment does not limit how to divide the value interval, in the actual use, the division strategy can be set according to the needs, for example, the status normal interval, the status abnormal interval, the status alarm interval of all indicators are uniformly set to [0.5,1],[0.3, 0.5], [0, 0.3], etc., which are not repeated here.

Operation 203, obtaining the data sequence according to the indicator data and the status of the indicator data.

It should be noted that the data in the data sequence contains the indicator data and the status of the indicator data, that is, the format of each data in the data sequence is that indicator data corresponds to its status (the indicator data to its status).

The embodiment of the present application, relative to the prior art, on the basis of achieving the beneficial effect brought by the first embodiment, since the status of the data are introduced into the indicator data, and the data sequence of the data to its status is obtained, and the object for finding the correlation rules is extended from the indicator data itself to the indicator data and the status of the indicator data, which makes the connotation of the correlation rule found richer.

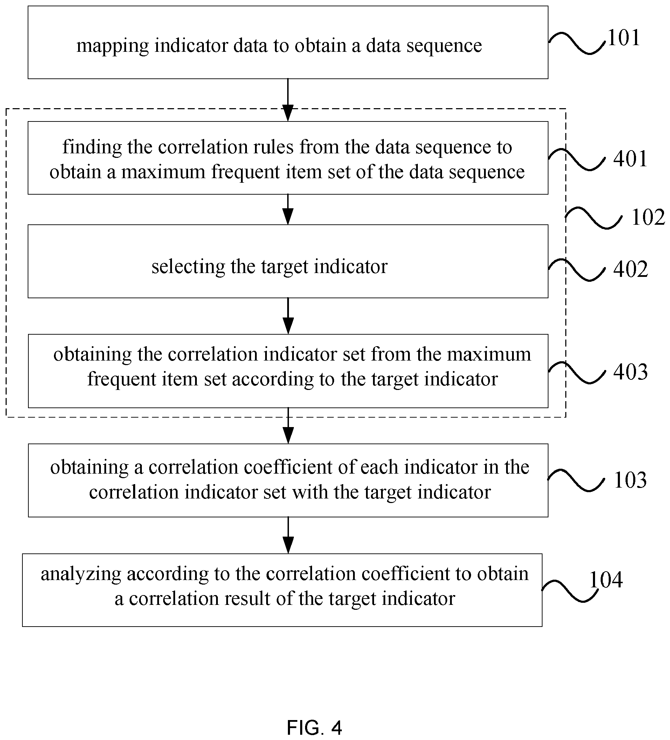

The third embodiment of the present application relates to a method for analyzing correlation rules of multidimensional network indicators, which is essentially the same as the method for analyzing correlation rules of multidimensional network indicators provided by the first embodiment of the present application, the difference is that, as shown in FIG. 4, operation 102 includes:

operation 401, finding the correlation rules from the data sequence to obtain a maximum frequent item set of the data sequence.

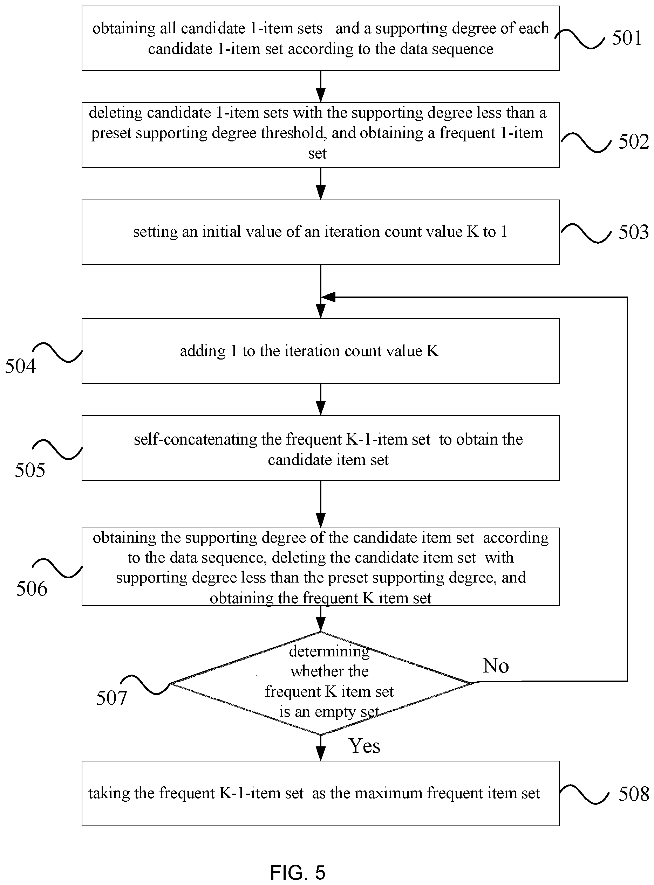

Specifically, as shown in FIG. 5, operation 401 may include the following operations.

Operation 501, obtaining all candidate 1-item sets $C_1$ and a supporting degree of each candidate 1-item set according to the data sequence.

Operation 502, deleting candidate 1-item sets with the supporting degree less than a preset supporting degree threshold, and obtaining a frequent 1-item set $L_1$.

Operation 503, setting an initial value of an iteration count value K to 1.

Operation 504, adding 1 to the iteration count value K.

Operation 505, self-concatenating the frequent K-1-item set $L_{k-1}$ to obtain the candidate item set $C_k$.

Operation 506, obtaining the supporting degree of the candidate item set $C_k$ according to the data sequence, deleting the candidate item set $C_k$ with supporting degree less than the preset supporting degree, and obtaining the frequent K item set $L_k$.

Operation 507, determining whether the frequent K item set $L_k$ is an empty set, returning to operation 504 when yes, entering operation 508 when not.

Operation 508, taking the frequent K-1-item set $L_{k-1}$ as the maximum frequent item set.

In the embodiment, the preset supporting degree is generally 5% to 10%, the threshold value of confidence degree is generally 70% to 90%, and the boost degree is generally greater than 1.

It should be noted that the above is the principle of finding correlation rule, in the actual use, the iteration can be improved based on the above principle to improve the efficiency of algorithm execution.

Operation 402, selecting the target indicator.

In the embodiment, the target indicator is selected according to the specific situation when in use, and the network indicators that currently need attention is selected. In actual use, the target indicator can be selected once and kept unchanged, or the selected target indicators can be replaced.

Operation 403, obtaining the correlation indicator set from the maximum frequent item set according to the target indicator.

It should be noted that the maximum frequent item set generally includes not only the correlation rules of the target indicator, but also the correlation rules of other indicators other than the target indicator, and the potential relationship between the target indicator and the target indicator is mainly focused, so the indicators that are not correlated to the target indicator can be deleted, and only the target indicator and the indicators correlated with the target indicator can be analyzed to reduce the calculation volume of the analysis.

The embodiment of the present application, relative to the prior art, on the basis of achieving the beneficial effect brought by the first embodiment, since the indicators that are not correlated with the target indicator are deleted, the number of indicators that need to be analyzed and the amount of calculation for analysis are reduced.

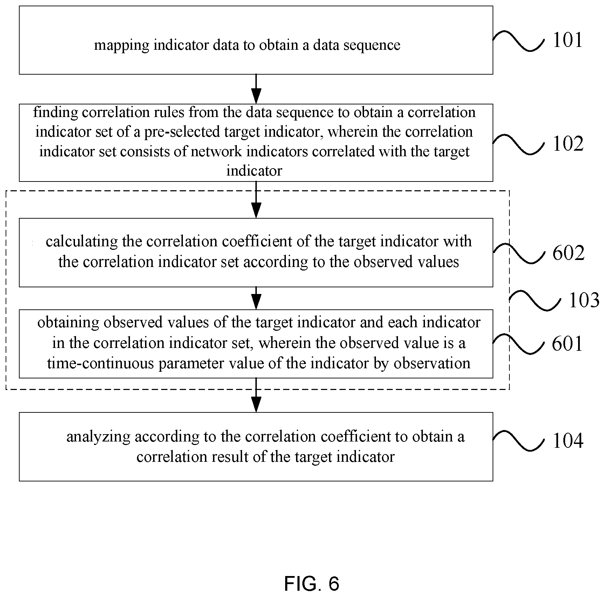

The fourth embodiment of the present application relates to a method for analyzing correlation rules of multidimensional network indicators, which is essentially the same as the method for analyzing correlation rules of multidimensional network indicators provided in the first embodiment of the present application, the difference is that, as shown in FIG. 6, operation 103 includes:

operation 601, obtaining observed values of the target indicator and each indicator in the correlation indicator set, wherein the observed value is a time-continuous parameter value of the indicator by observation.

In the embodiment, the specific observed method and observed time of the observed value are not limited, but the observed value cannot be data without reference value, for example, the data observed one year ago is taken as the observed value.

It should be noted that the correlation indicator set can only obtain a simple correlation relationship of the target indicator, and if further analysis of the correlation relationship is needed, the observed values of the indicators to be analyzed need to be obtained, and specific analysis is performed according to the observed values.

Operation 602, calculating the correlation coefficient of the target indicator with the correlation indicator set according to the observed values.

In the embodiment, the correlation coefficient is the Spearman correlation coefficient, then is obtained directly according to the standard formula of the Spearman correlation coefficient.

The embodiment of the present application, relative to the prior art, on the basis of achieving the beneficial effects brought by the first embodiment, since the Spearman correlation coefficient is used, the description of the correlation of network indicators with temporal order is more specific and accurate.

In order to enable those skilled in the art to more clearly understand the overall process of the method for analyzing correlation rules of multidimensional network indicators disclosed in the first to fourth embodiments of the present application above, the fifth embodiment of the present application is illustrated with specific operations as an example.

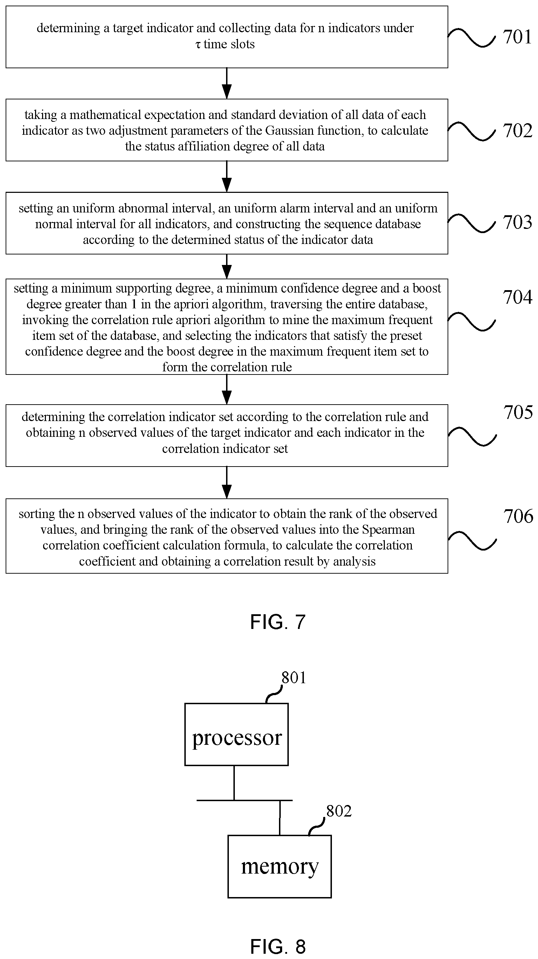

As shown in FIG. 7, the fifth embodiment of the present application provides the method for analyzing correlation rules of multidimensional network indicators, including:

operation 701, determining a target indicator and collecting data for n indicators under $\tau$ time slots.

In the embodiment, the data of 6 network indicators A,B,C,D,E,F can be collected, and the target indicator is the indicator D. The data is: $X=(X_1, X_2, ..., X_T)^T$, where $X_k=(X_1, X_2, ..., X_n)$.

Operation 702, taking a mathematical expectation and standard deviation of all data of each indicator as two adjustment parameters of the Gaussian function, to calculate the status affiliation degree of all data.

Operation 703, setting an uniform abnormal interval, an uniform alarm interval and an uniform normal interval for all indicators, and constructing the sequence database according to the determined status of the indicator data.

In the embodiment, [0, 0.3) is set as the abnormal interval Y, [0.3, 0.5) is set as the alarm interval G, and [0.5, 1] is set as the normal interval Z, the sequence database can be obtained as follows:

| sequenc e | A | B | C | D | E | F |
|---|---|---|---|---|---|---|
| 1 | A-Z | B-Z | C-G | D-Z | E-Z | F-Z |
| 2 | A-Z | B-Z | C-Z | D-Z | E-Z | F-G |
| ... | ... | ... | ... | ... | ... | ... |
| $\tau$-1 | A-Y | B-G | C-G | D-Z | E-Z | F-Z |
| $\tau$ | A-G | B-Z | C-Z | D-G | E-Z | F-Z |

Operation 704, setting a minimum supporting degree, a minimum confidence degree and a boost degree greater than 1 in the apriori algorithm, traversing the entire database, invoking the correlation rule apriori algorithm to mine the maximum frequent item set of the database, and selecting the indicators that satisfy the preset confidence degree and the boost degree in the maximum frequent item set to form the correlation rule.

In the embodiment, the minimum supporting degree is 10%, the minimum confidence degree is 60%, and the boost degree is greater than 1, the following correlation indicator set can be obtained:

| sequence | rule | supporting degree | confidence degree | boost degree |
|---|---|---|---|---|
| 1 | A-Y=>D-Y | 0.267 | 0.841 | 2.451 |
| 2 | A-G, B-Y=>D-G | 0.185 | 0.687 | 1.328 |
| 3 | B-Y, F-Y=>D-G | 0.211 | 0.798 | 1.432 |

Operation 705, determining the correlation indicator set according to the correlation rule and obtaining n observed values of the target indicator and each indicator in the correlation indicator set.

In the embodiment, the correlation indicator set is {A, B, F, D}, and the observed values form a continuous sequence of observed values, such as the continuous sequence of observed values of the indicator A is A={$a_1, a_2,...,a_n$}, and the continuous sequence of observed values of the indicator D is D={$d_1, d_2,...,d_n$}.

Operation 706, sorting the n observed values of the indicator to obtain the rank of the observed values, and bringing the rank of the observed values into the Spearman correlation coefficient calculation formula, to calculate the correlation coefficient and obtaining a correlation result by analysis.

In the embodiment, the indicator A and the indicator D are taken as an example, the data in the set $A=\{a_1, a_2, ..., a_n\}$ are sorted to obtain the rank $a_i$, and the data in the set $D=\{d_1, d_2, ..., d_n\}$ are sorted to obtain the rank $d_i$. The rank $a_i$ and

$$\rho = \frac{\sum_{i=1}^{n}(a_i - \overline{a})(d_i - \overline{d})}{\left[\sum_{i=1}^{n}(a_i - \overline{a})^2 \sum_{i=1}^{n}(d_i - \overline{d})^2\right]^{\frac{1}{2}}}$$

the rank $d_i$ are brought into the Spearman correlation coefficient calculation formula:

, $\rho$=0.864 is obtained, the indicator A and indicator D have a positive strong correlation by the analysis.

A sixth embodiment of the present application relates to a device, as shown in FIG. 8, including:

at least one processor 801; and

a memory 802 communicated with the at least one processor 801. The memory 802 stores instructions executable by the at least one processor, the instructions are executed by the at least one processor 801 to enable the at least one processor 801 to perform the method for analyzing correlation rules of multidimensional network indicators described in the first to fifth embodiments of the present application

The memory and the processor are connected by means of a bus, the bus may include any number of interconnected buses and bridges, and the bus connects together various circuits of one or more processors and the memory. The bus may also connect together various other circuits such as peripherals, voltage regulators, and power management circuits, which are well known in the art and therefore will not be further described herein. The bus interface provides an interface between the bus and the transceiver. The transceiver may be a single element or a plurality of elements, such as a plurality of receivers and transmitters, providing units for communicating with various other devices on a transmission medium. Data processed by the processor is transmitted over the wireless medium via an antenna, and further, the antenna also receives the data and transmits it to the processor.

The processor is responsible for managing the bus and the usual processing, and may also provide various functions including timing, peripheral interfaces, voltage regulation, power management, and other control functions, and a memory may be used to store data used by the processor in performing operations.

A seventh embodiment of the present application relates to a computer-readable storage medium storing a computer-executable instruction that when executed by a processor causes the processor to perform the method embodiments described above.

That is, it is understood by those skilled in the art that all or some of the operations in the method of the above embodiments can be accomplished by instructing the relevant hardware by a program stored in a storage medium, the program includes a number of instructions to cause a device (which may be a microcontroller, chip, etc.) or processor (processor) to perform all or some of the operations of the method described in the various embodiments of the present application. The aforementioned storage medium include: a USB flash drive, a mobile hard disk, a read-only memory (ROM), a random access memory (RAM), a disk or CD-ROM, and other medium that can store program code.

Those skilled in the art can understand that the above embodiments are specific embodiments for realizing the present application, and in practical application, various changes can be made to them in form and details without deviating from scope of the present application.

**Claims**

1. A method for analyzing correlation rules of multidimensional network indicators, **characterized by** comprising:

mapping indicator data to obtain a data sequence;
finding correlation rules from the data sequence to obtain a correlation indicator set of a pre-selected target indicator, wherein the correlation indicator set consists of network indicators correlated with the target indicator;
obtaining a correlation coefficient of each indicator in the correlation indicator set with the target indicator; and
analyzing according to the correlation coefficient to obtain a correlation result of the target indicator.

2. The method for analyzing the correlation rules of multidimensional network indicators according to claim 1, wherein the operation of mapping the indicator data to obtain the data sequence comprises:

performing a fuzzy mapping on the indicator data to obtain a status affiliation degree of the indicator data;

determining a status of the indicator data according to the status affiliation degree, wherein the status comprises a normal status, an alarm status, an abnormal status; and

obtaining the data sequence according to the indicator data and the status of the indicator data.

3. The method for analyzing the correlation rules of multidimensional network indicators according to claim 2, wherein the operation of determining the status of the indicator data according to the status affiliation degree, wherein the status comprises the normal status, the alarm status, the abnormal status comprises:

dividing a value interval of the status affiliation degree into a status normal interval, a status abnormal interval, and a status alarm interval;

determining that the indicator data is in the normal status in response that the status affiliation degree is within the status normal interval;

determining that the indicator data is in the abnormal status in response that the status affiliation degree is within the status abnormal interval; and

determining that the indicator data is in the alarm status in response that the status affiliation degree is within the status alarm interval.

4. The method for analyzing the correlation rules of multidimensional network indicators according to any one of claims 1 to 3, wherein the operation of finding the correlation rules from the data sequence to obtain the correlation indicator set of the pre-selected target indicator, wherein the correlation indicator set consists of network indicators correlated with the target indicator comprises:

finding the correlation rules from the data sequence to obtain a maximum frequent item set of the data sequence; and

obtaining the correlation indicator set from the maximum frequent item set according to the target indicator.

5. The method for analyzing the correlation rules of multidimensional network indicators according to claim 4, wherein the operation of finding the correlation rules from the data sequence to obtain the maximum frequent item set of the data sequence comprises:

obtaining all candidate 1-item sets and a supporting degree of each candidate 1-item set according to the data sequence, wherein one data in the data sequence constitutes one candidate 1-item set and the supporting degree is a probability of occurrence of the candidate 1-item set in the data sequence;

deleting candidate 1-item sets with the supporting degree less than a preset supporting degree threshold from all candidate 1-item sets, and obtaining a frequent 1-item set; and

iterating according to the frequent 1-item set and the data sequence to obtain the maximum frequent item set.

6. The method for analyzing the correlation rules of multidimensional network indicators according to claim 5, wherein the operation of iterating for an ith time comprises:

concatenating a frequent i-item set obtained in a previous iteration to obtain a candidate i+1-item set, wherein i and i+1 denote a count value of the number of iterations;

obtaining the supporting degree of the candidate i+1-item set according to the data sequence;

deleting candidate i-item sets with the supporting degree less than the preset supporting degree threshold from all candidate i+1-item sets to obtain a frequent i+1-item set;

determining whether the frequent i+1-item set is an empty set;

determining that the frequent i-item set is the maximum frequent item set in response that the frequent i+1-item set is the empty set; and

performing an i+1 st iteration in response that the frequent i+1-item set is not the empty set.

7. The method for analyzing the correlation rules of multidimensional network indicators according to any one of claims 1 to 6, wherein the operation of obtaining the correlation coefficient of each indicator in the correlation indicator set with the target indicator comprises:

obtaining observed values of the target indicator and each indicator in the correlation indicator set, wherein the observed value is a time-continuous parameter value of the indicator by observation; and

calculating the correlation coefficient of the target indicator with the correlation indicator set according to the observed values.

8. The method for analyzing the correlation rules of multidimensional network indicators according to any of claims 1 to 7, wherein the correlation coefficient is a Spearman correlation coefficient.

9. A device for analyzing correlation rules of multidimensional network indicators, **characterized in that** the device comprises a memory, a processor, a program stored on the memory and runnable on the processor, and a data bus for implementing communication between the processor and the memory, the program are executed by the processor to implement the operations of the method for analyzing the correlation rules of multidimensional network indicators according to any one of claims 1 to 8.

10. A storage medium, **characterized by** storing one or more programs that when executed by one or more processors causes the processor to perform the operations of the method for analyzing the correlation rules of multidimensional network indicators according to any one of claims 1 to 8.

mapping indicator data to obtain a data sequence ⟶ 101

finding correlation rules from the data sequence to obtain a correlation indicator set of a pre-selected target indicator, wherein the correlation indicator set consists of network indicators correlated with the target indicator ⟶ 102

obtaining a correlation coefficient of each indicator in the correlation indicator set with the target indicator ⟶ 103

analyzing according to the correlation coefficient to obtain a correlation result of the target indicator ⟶ 104

FIG. 1

performing a fuzzy mapping on the indicator data to obtain a status affiliation degree of the indicator data — 201

determining a status of the indicator data according to the status affiliation degree, wherein the status includes a normal status, an alarm status, an abnormal status — 202

— 101

obtaining the data sequence according to the indicator data and the status of the indicator data — 203

finding correlation rules from the data sequence to obtain a correlation indicator set of a pre-selected target indicator, wherein the correlation indicator set consists of network indicators correlated with the target indicator — 102

obtaining a correlation coefficient of each indicator in the correlation indicator set with the target indicator — 103

analyzing according to the correlation coefficient to obtain a correlation result of the target indicator — 104

FIG. 2

dividing a value interval of the status affiliation degree into a status normal interval, a status abnormal interval, and a status alarm interval — 301

detecting whether the status affiliation degree is within the status normal interval — 302

Yes

No

304

detecting whether the status affiliation degree is within the status alarm interval

Yes

No

303

determining that the indicator data is in normal status

306

determining that the indicator data is in the alarm status

determining that the indicator data is in the abnormal status — 305

FIG. 3

```
mapping indicator data to obtain a data sequence          ⌇ 101

┌─ finding the correlation rules from the data sequence to
   obtain a maximum frequent item set of the data sequence   ⌇ 401
                                                              ⌇ 102
   selecting the target indicator                             ⌇ 402

   obtaining the correlation indicator set from the maximum
└─ frequent item set according to the target indicator       ⌇ 403

obtaining a correlation coefficient of each indicator in the
correlation indicator set with the target indicator          ⌇ 103

analyzing according to the correlation coefficient to obtain
a correlation result of the target indicator                 ⌇ 104
```

FIG. 4

obtaining all candidate 1-item sets and a supporting degree of each candidate 1-item set according to the data sequence ⟋ 501

deleting candidate 1-item sets with the supporting degree less than a preset supporting degree threshold, and obtaining a frequent 1-item set ⟋ 502

setting an initial value of an iteration count value K to 1 ⟋ 503

504 adding 1 to the iteration count value K

505 self-concatenating the frequent K-1-item set to obtain the candidate item set

506 obtaining the supporting degree of the candidate item set according to the data sequence, deleting the candidate item set with supporting degree less than the preset supporting degree, and obtaining the frequent K item set

507 determining whether the frequent K item set is an empty set    No

Yes

taking the frequent K-1-item set as the maximum frequent item set ⟋ 508

FIG. 5

mapping indicator data to obtain a data sequence 　　101

finding correlation rules from the data sequence to obtain a correlation indicator set of a pre-selected target indicator, wherein the correlation indicator set consists of network indicators correlated with the target indicator 　　102

calculating the correlation coefficient of the target indicator with the correlation indicator set according to the observed values 　　602

　　103

obtaining observed values of the target indicator and each indicator in the correlation indicator set, wherein the observed value is a time-continuous parameter value of the indicator by observation 　　601

analyzing according to the correlation coefficient to obtain a correlation result of the target indicator 　　104

FIG. 6

```
┌─────────────────────────────────────────────────────────┐
│ determining a target indicator and collecting data for n │      701
│ indicators under τ time slots                            │
└─────────────────────────────────────────────────────────┘
                            │
                            ▼
┌─────────────────────────────────────────────────────────┐
│ taking a mathematical expectation and standard deviation │      702
│ of all data of each indicator as two adjustment          │
│ parameters of the Gaussian function, to calculate the    │
│ status affiliation degree of all data                    │
└─────────────────────────────────────────────────────────┘
                            │
                            ▼
┌─────────────────────────────────────────────────────────┐
│ setting an uniform abnormal interval, an uniform alarm   │      703
│ interval and an uniform normal interval for all          │
│ indicators, and constructing the sequence database       │
│ according to the determined status of the indicator data │
└─────────────────────────────────────────────────────────┘
                            │
                            ▼
┌─────────────────────────────────────────────────────────┐
│ setting a minimum supporting degree, a minimum           │      704
│ confidence degree and a boost degree greater than 1 in   │
│ the apriori algorithm, traversing the entire database,   │
│ invoking the correlation rule apriori algorithm to mine  │
│ the maximum frequent item set of the database, and       │
│ selecting the indicators that satisfy the preset         │
│ confidence degree and the boost degree in the maximum    │
│ frequent item set to form the correlation rule           │
└─────────────────────────────────────────────────────────┘
                            │
                            ▼
┌─────────────────────────────────────────────────────────┐
│ determining the correlation indicator set according to   │      705
│ the correlation rule and obtaining n observed values of  │
│ the target indicator and each indicator in the           │
│ correlation indicator set                                │
└─────────────────────────────────────────────────────────┘
                            │
                            ▼
┌─────────────────────────────────────────────────────────┐
│ sorting the n observed values of the indicator to obtain │      706
│ the rank of the observed values, and bringing the rank   │
│ of the observed values into the Spearman correlation     │
│ coefficient calculation formula, to calculate the        │
│ correlation coefficient and obtaining a correlation      │
│ result by analysis                                       │
└─────────────────────────────────────────────────────────┘
```

FIG. 7

```
           801
    ┌──────────────┐
    │  processor   │
    └──────────────┘
           │
           │
           │  802
    ┌──────────────┐
    │   memory     │
    └──────────────┘
```

FIG. 8

## INTERNATIONAL SEARCH REPORT

| International application No. |
| --- |
| **PCT/CN2021/107922** |

| A. | CLASSIFICATION OF SUBJECT MATTER |
| --- | --- |
| | H04L 12/24(2006.01)i |

According to International Patent Classification (IPC) or to both national classification and IPC

| B. | FIELDS SEARCHED |
| --- | --- |

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, EPODOC, WPI: 网络, 运行, 维护, 运维, 参数, 状态, 正常, 异常, 数据挖掘, 频繁项集, 相关, 关联, 规则, network, operation, maintenance, parameter, state, normal, exception, data mining, frequent item set, correlate, relation, rule

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | CN 106603317 A (SHANDONG INSPUR BUSINESS SYSTEM CO., LTD.) 26 April 2017 (2017-04-26)<br>  description, paragraphs 22-37 | 1-10 |
| A | US 2018316707 A1 (ELASTICSEARCH B.V.) 01 November 2018 (2018-11-01)<br>  entire document | 1-10 |
| A | CN 105069710 A (INFORMATION AND COMMUNICATION BRANCH OF STATE GRID JIANGXI ELECTRIC POWER COMPANY et al.) 18 November 2015 (2015-11-18)<br>  entire document | 1-10 |
| A | CN 111585809 A (BEIJING RUNSTONE TECHNOLOGY CO., LTD.) 25 August 2020 (2020-08-25)<br>  entire document | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 October 2021** | **25 October 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

| | International application No. |
|---|---|
| | **PCT/CN2021/107922** |

| Patent document cited in search report | | | Publication date (day/month/year) | Patent family member(s) | | | Publication date (day/month/year) |
|---|---|---|---|---|---|---|---|
| CN | 106603317 | A | 26 April 2017 | None | | | |
| US | 2018316707 | A1 | 01 November 2018 | WO | 2018200112 | A1 | 01 November 2018 |
| CN | 105069710 | A | 18 November 2015 | None | | | |
| CN | 111585809 | A | 25 August 2020 | None | | | |

Form PCT/ISA/210 (patent family annex) (January 2015)

**EP 4 195 606 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010898021